Europäisches Patentamt

European Patent Office

Office européen des brevets

(11) Publication number: **0 172 750**
A2

## (12) EUROPEAN PATENT APPLICATION

(21) Application number: **85305926.9**

(22) Date of filing: **20.08.85**

(51) Int. Cl.⁴: **B 29 C 67/20**
B 29 C 47/00, B 29 C 55/00
//B29K105:04, B29K27:18

(30) Priority: **22.08.84 US 643298**

(43) Date of publication of application:
**26.02.86 Bulletin 86/9**

(84) Designated Contracting States:
**DE FR GB IT NL**

(71) Applicant: **E.I. DU PONT DE NEMOURS AND COMPANY**
**1007 Market Street**
**Wilmington Delaware 19898(US)**

(72) Inventor: **Smith, Paul**
**504 Baynard Boulevard**
**Wilmington Delaware 19803(US)**

(74) Representative: **Myerscough, Philip Boyd et al,**
**J.A.Kemp & Co. 14, South Square Gray's Inn**
**London, WC1R 5EU(GB)**

(54) Porous structures.

(57) A semisintered polytetrafluoroethylene article which is prepared by heating at least a part of an unsintered polytetrafluoroethylene article at a temperature of at least the melting point of the sintered polymer, the heated part of the article having an endothermic curve at a temperature of $345 \pm 5°C$ on a crystalline melting chart measured with a differential scanning calorimeter and a crystalline conversion of from 0.10 to 0.85 defined by heat of fusion of the unsintered, semisintered and sintered polymers, and the crystallinity of the heated portion of the semisintered article measured by X-ray diffraction being from 78 to 95%.

EP 0 172 750 A2

**0172750**

## TITLE

### POROUS STRUCTURES

### BACKGROUND OF THE INVENTION

This invention relates to semisintered polytetrafluoroethylene articles, to porous material made by expanding the articles, and to processes for preparing them.

There are methods known in the art for expanding paste extruded unsintered dispersion produced PTFE articles. One process, described in US Patent 3,664,915, comprises paste extruding such dispersion produced PTFE (called in the art "fine powder") having a crystallinity of at least 95% at a temperature below the melting point of the PTFE, extracting the paste lubricant, and expanding the extrudate at a temperature below the crystalline melting point. The process described in European patent application 87 149 (corresponding to Japanese laid-open 59-152825) produces a porous PTFE material by expanding a semisintered article made from "fine powder".

Another method comprises heating a sintered PTFE at over 377°C, cooling it slowly and expanding the cooled article.

Heretofore, adequate porous expanded PTFE articles were thought to be obtainable only from dispersion produced PTFE (fine powder). In the process of EP 87 149, PTFE semisintered articles are produced by heating unsintered PTFE at a temperature of at least the melting point of sintered PTFE. However, the only type of PTFE used in this process is fine powder and EP 87 149 does not disclose use of granular type or importance of compression during heating for obtaining porous material from granular type PTFE. PTFE produced by suspension polymerization (which produces what is called "granular" PTFE) was not believed to be stretchable because the material would break. It has now been found that a semisintered polytetrafluoroethylene article produced from such a granular PTFE is stretchable biaxially to obtain a porous PTFE material of good tensile strength and smooth surface.

SUMMARY OF THE INVENTION

More specifically, there is provided a semisintered polytetrafluoroethylene article which is prepared from granular PTFE by heating molded unsintered granular (suspension polymerized) PTFE articles while under compression at a temperature of between 332 and 345°C followed by stretching the article at a lower temperature.

It is advantageous to use granular PTFE rather than fine powder PTFE because of granular PTFE's lower cost and because large porous articles can more easily be produced from granular than from fine powder PTFE.

DETAILED DESCRIPTION OF THE INVENTION

The term "PTFE" includes a homopolymer of tetrafluoroethylene and copolymers of tetrafluoroethylene modified with not more than 2% by weight of other monomer(s) copolymerizable with tetrafluoroethylene. These polymers may be produced according to the procedures described in Esker U.S.P. 3,629,219 or Doughty U.S.P. 3,855,191. They have a particle size of between about 20-40 microns.

The heating time while under compression required in the present process may be determined by measurement of the apparent specific gravity of the heated article. The unsintered PTFE has an apparent specific gravity between 1.2 to 1.7, preferably from 1.4 to 1.7. The unsintered PTFE is formed into an article and heated at a temperature of from 332-345°C under compression of 80-120 kg/cm$^2$ pressure. The apparent specific gravity after such treatment evidences semisintering by rising to at least 1.8 or more.

It is likely that the required degree of compression can be achieved in an extruder during ram extrusion.

After heating the unsintered PTFE article under compression for a sufficient period of time to obtain the semisintered PTFE article, the semisintered PTFE article cooled to less than 200°C and expanded in a separate stage. In the process of the invention, it is not necessary to cool the article slowly.

Percent crystallinity is determined by X-ray diffraction. The crystallinity is determined from the peak at 2 -18° corresponding to the crystalline portion and that at 2 -16° corresponding to the amorphous portion as follows:

In order to separate an area for the crystalline portion and that for the amorphous portion in the X-ray diffraction peak, a line can be drawn from a point on the curve at 2°-16° to the right-hand foot of the peak.

The crystallinity is calculated by the following equation:

$$\text{Crystallinity (\%)} = \frac{100 \; Ic}{Ic + 0.66 \; Ia}$$

wherein Ic is the area for the crystalline portion and Ia is the area for the amorphous portion.

The semisintered PTFE article of the invention may be any conventional shape such as film, sheet, tube, rod, etc. Organic or inorganic fillers may be incorporated in order to improve the mechanical, physical and chemical properties. Examples of the fillers are glass, carbon, graphite, silica, titanium oxide, zinc oxide, potassium titanate, talc, polymers (eg. tetrafluoroethylene polymers, polyamides, polyamideimide, etc.).

Further, the semisintered PTFE article is expandable or stretchable, and forms a porous PTFE material.

Expansion or stretching of the semisintered PTFE article is carried out by a conventional method at a temperature of from a room temperature to the melting point of the unsintered PTFE, but usually below 200°C.

The draw ratio may vary with the final use and is usually up to about 10.

In the following Example parts are by weight.

## EXAMPLE

Unsintered polytetrafluoroethylene (PTFE) homopolymer prepared by the suspension polymerization method to obtain granular polymer was compression molded into sheets of dimensions 15 x 15 cm, thickness 0.1-1mm under a pressure of 100 $kg/cm^2$ at temperatures ranging from 300-360°C. The hot sheets were subsequently cooled down to room temperature. Dumbbell-shaped specimens of 4cm length were cut from the cooled sheets. These specimens were stretched in a stretching frame at a temperature of 200°C. The results of these tests are collected in Table I.

TABLE I

| Compression Temp. °(C) | DSC Peak | % Cryst. ( 2%) | Maximum Elongation % | Remarks |
|---|---|---|---|---|
| 300 | - | - | brittle fracture | - |
| 320 | - | - | brittle fracture | - |
| 330 | 347° | 96.3 | brittle fracture | - |
| 335 | 345° | 96.1 | brittle fracture | - |
| 340 | 343° | 95.5 | 5000 | fibrill formation |
| 342 | 340° 324° | 94.3 | 2000 | porous material |
| 345 | 324° 345° | 79.4 | 1500 | porous material |
| 350 | 327° | 76.1 | 450 | dense material |
| 360 | 330° | 74.8 | 450 | dense material |

The stretch rate was 100%/min. Stretching at room temperature or at temperatures lower than 335°C gave similar results. Increasing the stretch rate from 100%/min to 60,000 %/min. only affected the drawing behavior of the samples compression molded at 330-340°C. Instead of brittle fracture, large elongations of more than 1000% were obtained and the resulting product was porous.

A typical granular PTFE homopolymer useful in this Example has an apparent bulk density of 475 g/l. Molded placques have a tensile strength of 3500 psi or more. The particle size of the homopolymer was between 20 and 40 microns.

## CLAIMS

1. A process for producing a semisintered polytetrafluoroethylene article which comprises heating an unsintered granular polytetrafluoroethylene article while under compression at a temperature of between 332 and 345$^O$C and then stretching the article at a lower temperature.

2. A process according to claim 1 wherein the unsintered granular polytetrafluoroethylene has a specific gravity of 1.4 to 1.7.

3. A process according to claim 1 or 2 wherein the article is under compression of 7.8 to 1.2 MPa (80 to 120 kg/cm$^2$) pressure.

4. A process according to claim 1, 2 or 3 wherein the heated article is cooled to less than 200$^O$C and expanded in a separate stage.